# EUROPEAN PATENT APPLICATION

(11) **EP 4 357 505 A1**
(43) Date of publication of application: **24.04.2024**
(21) Application number: 22825149.2
(22) Date of filing: 02.05.2022
(51) Int. Cl.: D04H 1/55, D04H 1/559, D04H 3/147, D04H 3/011, D04H 13/00, B60R 13/08

(54) **MELTBLOWN NON-WOVEN FABRIC, MULTI-LAYERED SPUNBONDED NON-WOVEN FABRIC COMPRISING SAME, AND METHOD FOR MANUFACTURING SAME**

(30) Priority: 14.06.2021 KR 20210076725
(71) Applicant: Toray Advanced Materials Korea Inc., Gumi-si, Gyeongsangbuk-do 39389 (KR)
(72) Inventor: LIM, Seong Su, Gumi-si, Gyeongsangbuk-do 39389 (KR); MIN, Kyung Won, Gumi-si, Gyeongsangbuk-do 39389 (KR)
(74) Representative: SONN Patentanwälte GmbH & Co KG
(86) International application number: PCT/KR2022/006232
(87) International publication number: WO 2022/265221

(57) **Abstract**

The present invention relates to meltblown non-woven fabric, multi-layered spunbonded non-woven fabric comprising same, and a method for manufacturing same, and to: meltblown non-woven fabric which uses recycled polyester flakes, thus being environmentally friendly, and is a material used in a sound absorbing material for automobiles due to the excellent rigidity, sound absorption capability and compressive modulus thereof, and thus can be used in automobile interior materials that require rigidity, sound absorption capability, and compressive modulus, such as wheel guards and trunk trims of automobiles; multi-layered spunbonded non-woven fabric comprising same; and a method for manufacturing same.

## Description

### [Technical Field]

The present invention relates to a meltblown nonwoven fabric, a multi-layered spunbond nonwoven fabric including the same, and a manufacturing method thereof. The present invention relates to a meltblown nonwoven fabric which is a material, which is eco-friendly due to being manufactured using recycled polyester flakes and is used as a sound absorbing material for automobiles due to having excellent rigidity and sound absorption and an excellent compressive modulus, and is applicable to automotive interior materials such as automobile wheel guards and trunk trims that require rigidity, sound absorption, and a good compressive modulus; a multi-layered spunbond nonwoven fabric including the same; and a manufacturing method thereof.

### [Background Art]

Various types of non-woven fabric formulations are applied to automobiles for the purpose of sound insulation and sound absorption, but in most cases, components in the form of being coated with a film of ethylene vinyl acetate (EVA), polyethylene (PE), polypropylene (PP), or the like are applied to carpets, headlining or the like for the purposes of sound absorption and sound insulation, waterproofing, dustproofing, and molding processability. Most of these components, in the cases of waste components generated after automobile scrapping, defective products generated from a manufacturing process, or scraps generated after product molding, may not be recycled and are treated as heat sources in places such as cement sintering or thermal cogeneration power plants.

In particular, in order to reduce noise generated from wheels while driving for quiet vehicle operation, wheel guard materials are being converted from existing olefin-based polymer injection molded products to nonwoven composite products using fiber. However, there are limitations to their generalization due to the problem of increased component costs compared to olefin-based polymer molded products. In addition, the cotton weight of general nonwoven fabric for automobile wheel guards is generally 800 to 1,600 g per square meter, but the use of such nonwoven fabric is limitedly applied to luxurious car models due to the high weight and complicated manufacturing process which increase the manufacturing cost of components, compared to existing injection type products.

In addition, technologies for recycling waste automobile carpets and carpet scraps through various methods have been reported.

Previously, Korean Patent Publication No. 2013-0005593 discloses a sound absorbing and insulating material manufactured through a process of finely pulverizing waste sheets, mixing polyester fibers, low-melting point polyester fibers, polypropylene fibers, and hemp with the pulverized material obtained through this process, and then carting the resulting mixture. However, when urethane foam is manufactured by mixing it with polyester fibers, there is a problem of insufficient rigidity because materials of different shapes are combined with a low-melting point polyester binder. In addition, there is a needle punching process in the process, but the overall rigidity of the recycled sound-absorbing material is insufficient because intertwining occurs between the fibers rather than intertwining between the urethane foam and the fibers. Therefore, when applied to automobiles, there was a problem that its use is limited such that it is applied to sound absorbing components that do not require rigidity.

### [Disclo sure]

### [Technical Problem]

The present invention was developed to solve the above problems and is directed to providing a meltblown nonwoven fabric which is a material, which is eco-friendly due to being manufactured using recycled polyester flakes and is used as a sound absorbing material for automobiles due to having excellent rigidity and sound absorption and an excellent compressive modulus, and is applicable to automotive interior materials such as automobile wheel guards and trunk trims that require rigidity, sound absorption, and a good compressive modulus; a multi-layered spunbond nonwoven fabric including the same; and a manufacturing method thereof.

### [Technical Solution]

To solve the above problem, a method of manufacturing a meltblown nonwoven fabric according to the present invention may include: a first step of manufacturing polyester flake powder by pulverizing polyester flakes; a second step of crystallizing the manufactured polyester flake powder by heating; a third step of manufacturing a melt by melting the crystallized polyester flake powder; and a fourth step of manufacturing a meltblown nonwoven fabric by manufacturing meltblown fibers by spinning the melt and laminating the manufactured fibers.

In one preferred embodiment of the present invention, the melt manufactured in the third step may include 0.3 to 3.0 mol% of isophthalic acid (IPA).

In one preferred embodiment of the present invention, the polyester flakes may include one or more selected from polyethylene terephthalate (PET) flakes, polytetramethylene terephthalate (PTT) flakes, polybutylene terephthalate (PBT) flakes, and polypropylene (PP) flakes.

In one preferred embodiment of the present invention, the flake powder manufactured in the first step may have an average particle size of 1 to 10 mm.

In one preferred embodiment of the present invention, the heating in the second step may be performed at a temperature of 100 to 180 °C.

In one preferred embodiment of the present invention, the melt manufactured in the third step may have an intrinsic viscosity (IV) of 0.40 to 0.60 dl/g.

In one preferred embodiment of the present invention, the meltblown fibers manufactured in the fourth step may have an average diameter of 0.5 to 20 µm.

In one preferred embodiment of the present invention, the meltblown nonwoven fabric manufactured in the fourth step may have a basis weight of 100 to 900 gsm.

Meanwhile, the meltblown nonwoven fabric of the present invention may include 0.3 to 3.0 mol% of isophthalic acid (IPA) and have a basis weight of 100 to 900 gsm.

In one preferred embodiment of the present invention, the meltblown nonwoven fabric of the present invention may be manufactured by spinning a polyester flake melt.

In one preferred embodiment of the present invention, the meltblown nonwoven fabric of the present invention may be composed of meltblown fibers with an average diameter of 0.5 to 20 µm.

In one preferred embodiment of the present invention, the meltblown nonwoven fabric of the present invention may have a rigidity of 1.3 to 1.5 MPa when measured according to KS M 6518 specifications.

Furthermore, the multilayer spunbond nonwoven fabric of the present invention may be a multilayer spunbond nonwoven fabric having a spunbond nonwoven fabric as an outermost layer and one or more meltblown nonwoven fabric layers as an inner layer, wherein the meltblown nonwoven fabric layer may include the meltblown nonwoven fabric of the present invention mentioned above.

At this time, the multilayer spunbond nonwoven fabric may be used as an automotive sound absorbing material.

Hereinafter, terms used in the present invention will be explained.

The term 'fiber' used in the present invention means 'yarn' or 'thread' and refers to various types of typical yarns and fibers.

### [Advantageous Effects]

A meltblown nonwoven fabric, a multilayer spunbond nonwoven fabric including the same, and a manufacturing method thereof according to the present invention are not only eco-friendly due to using recycled polyester flakes but also applicable to automotive interior materials such as automobile wheel guards and trunk trims that require rigidity, sound absorption, and a good compressive modulus, as a material having excellent rigidity and sound absorption and an excellent compressive modulus and used for automotive sound absorbing materials.

### [Modes of the Invention]

Hereinafter, with reference to the attached drawings, embodiments of the present invention will be described in detail so that those skilled in the art can easily implement the present invention. The present invention may be implemented in many different forms and is not limited to the embodiments described herein. In order to clearly explain the present invention in the drawings, parts not related to the description are omitted, and identical or similar components are given the same reference numerals throughout the specification.

A method of manufacturing a meltblown nonwoven fabric of the present invention includes first to fourth steps.

First, in the first step of the method of manufacturing a meltblown nonwoven fabric of the present invention, polyester flake powder may be manufactured by pulverizing polyester flakes.

At this time, the polyester flakes may include one or more selected from polyethylene terephthalate (PET) flakes, polytetramethylene terephthalate (PTT) flakes, polybutylene terephthalate (PBT) flakes, and polypropylene (PP) flakes, and may preferably include polyethylene terephthalate (PET) flakes.

In addition, the polyester flakes of the present invention may be manufactured separately from waste carpet and waste felt scraps.

In addition, the polyester flake powder manufactured by pulverizing may have an average particle size of 1 to 10 mm, preferably 2 to 7 mm, and more preferably 3 to 6 mm. When the average particle size is less than 1 mm, the generation of dust increases during the manufacturing process, which may cause dust contamination or health problems in workers, and fine particles of polyester flake powder may be deposited into the dead space within the EXT' during the melting process, which may generate carbides, causing a problem of generating foreign substances in the PET melt. When the average particle size exceeds 10 mm, there may be a problem of causing hunting during the EXT' operation due to the relatively large particle size of the powder.

Next, in the second step of the method of manufacturing a meltblown nonwoven fabric of the present invention, the polyester flake powder manufactured in the first step may be crystallized by heating. At this time, heating may be performed at a temperature of 100 to 180 °C, preferably 120 to 160 °C, and more preferably 130 to 150 °C. When the heating temperature is less than 100 °C, the removal of moisture in the flake powder is uneven, resulting in a deviation in the moisture content in the powder, and in the case in which the moisture content is high, hydrolysis may occur during the melting process, thereby causing a problem of reducing workability due to polymer drips during a spinning process. When the heating temperature exceeds 180 °C, flakes may agglomerate with each other during the crystallization step, resulting in uneven crystallization and drying, and in the case in which the degree is severe, there may be a problem of equipment failure due to overload within the crystallization equipment.

Next, in the third step of the method of manufacturing a meltblown nonwoven fabric of the present invention, a melt may be manufactured by melting the polyester flake powder crystallized in the second step.

At this time, the melt may include 0.3 to 3.0 mol%, preferably 0.5 to 2.5 mol% of isophthalic acid (IPA). When isophthalic acid (IPA) is included in an amount less than 0.3 mol%, the fineness of the fibers within the nonwoven fabric increases due to increases in viscosity and melting point, and there may be a problem of decreasing the strength of the nonwoven fabric due to the relatively fast solidification speed. When isophthalic acid (IPA) is included in an amount exceeding 3.0 mol%, as the viscosity and melting point decrease, the fineness of the nonwoven web may become non-uniform. At this time, when the nonuniformity increases, there may be a problem of generating a partial difference in the sound absorption performance in the low frequency range. In addition, the melting temperature may be a temperature capable of melting the crystallized polyester flake powder, and may preferably be a temperature of 240 to 320 °C.

Meanwhile, the melt manufactured in the third step may have an intrinsic viscosity (IV) of 0.40 to 0.60 dl/g, preferably 0.45 to 0.55 dl/g. When the intrinsic viscosity of the melt is less than 0.40 dl/g, there may be problems of non-uniform fineness due to low viscosity and poor workability due to polymer drips. When the intrinsic viscosity exceeds 0.60 dl/g, there may be problems that non-uniform polymer flowability in the meltblown nozzle due to high viscosity may cause a fineness deviation and that nozzle hole clogging may occur as the hole of the meltblown nozzle is partially clogged due to high viscosity.

Finally, in the fourth step of the method of manufacturing a meltblown nonwoven fabric of the present invention, a meltblown nonwoven fabric may be manufactured by manufacturing meltblown fibers by spinning the melt manufactured in the third step and laminating the manufactured fibers.

The spinning may be performed in a spinneret for melt blowing, and the spinning may be performed at a spinning temperature of 260 to 280 °C. In addition, immediately after the spinning, solidification may be performed with high-pressure hot air at 250 to 290 °C, preferably 260 to 280 °C to manufacture meltblown fibers.

The manufactured meltblown fibers may have an average diameter of 0.5 to 20 µm, preferably an average diameter of 1.0 to 10 µm. When the average diameter is less than 0.5 µm, the solidification speed may be too fast to form a nonwoven fabric due to the fineness, and even if some nonwoven fabric is formed, there may be a problem of insufficient strength of the nonwoven fabric. When the average diameter exceeds 20 µm, there may be a problem that sound absorption performance is insufficient in the high frequency range.

In addition, the manufactured meltblown nonwoven fabric may have a basis weight of 100 to 900 gsm, preferably 500 to 900 gsm, and more preferably 600 to 800 gsm. When the basis weight of the meltblown nonwoven fabric is less than 100 gsm, there may be a problem of insufficient sound absorption performance in the low frequency range due to insufficient weight. When the basis weight exceeds 900 gsm, there may be an issue with assembly due to an increase in the volume of the nonwoven fabric, and there may be a problem that the fuel efficiency of the car may decrease when the weight of the nonwoven fabric becomes high.

Meanwhile, a meltblown nonwoven fabric of the present invention may be manufactured through the method of manufacturing a meltblown nonwoven fabric of the present invention described above.

Specifically, the meltblown nonwoven fabric of the present invention may be a meltblown nonwoven fabric manufactured by spinning a polyester flake melt. At this time, the meltblown nonwoven fabric may include 0.3 to 3.0 mol%, preferably 0.5 to 2.5 mol% of isophthalic acid (IPA), and may have a basis weight of 100 to 900 gsm, preferably a basis weight of 500 to 900 gsm, and more preferably a basis weight of 600 to 800 gsm.

As a more specific example, when the basis weight of the meltblown nonwoven fabric of the present invention is 100 to 700 gsm, preferably 550 to 650 gsm, isophthalic acid (IPA) may be included in an amount of 0.3 to 0.9 mol%, preferably 0.3 to 0.7 mol%, and when the basis weight of the meltblown nonwoven fabric of the present invention is 700 to 900 gsm, preferably 750 to 850 gsm, isophthalic acid (IPA) may be included in an amount of 1.5 to 3.0 mol%, preferably 2.3 to 2.7 mol%.

Meanwhile, the meltblown nonwoven fabric of the present invention may be composed of meltblown fibers with an average diameter of 0.5 to 20 µm, preferably 1.0 to 10 µm, and more preferably 1.0 to 5 µm. As a more specific example, when the basis weight of the meltblown nonwoven fabric of the present invention is 100 to 700 gsm, preferably 550 to 650 gsm, the meltblown nonwoven fabric of the present invention may be composed of meltblown fibers with an average diameter of 0.5 to 10 µm, preferably 0.5 to 5 µm, and more preferably 0.7 to 2 µm, and when the basis weight of the meltblown nonwoven fabric of the present invention is 700 to 900 gsm, preferably 750 to 850 gsm, the meltblown nonwoven fabric of the present invention may be composed of meltblown fibers with an average diameter of 5 to 20 µm, preferably 8 to 15 µm, and more preferably 8 to 12 µm.

In addition, the meltblown nonwoven fabric of the present invention may have a rigidity of 1.3 to 1.5 MPa, preferably 1.33 to 1.45 MPa, when measured according to KS M 6518 specifications.

Furthermore, a multilayer spunbond nonwoven fabric of the present invention may include one or more layers of the meltblown nonwoven fabric of the present invention mentioned above.

Specifically, the multilayer spunbond nonwoven fabric of the present invention may be a nonwoven fabric having a spunbond nonwoven fabric as an outermost layer and one or more meltblown nonwoven fabric layers as an inner layer, wherein the meltblown nonwoven fabric layer may include the meltblown nonwoven fabric of the present invention.

The basic nonwoven configuration of the multilayer spunbonded nonwoven fabric of the present invention may include multiple layers in the form of spunbonded nonwoven fabric/meltblown nonwoven fabric/spunbonded nonwoven fabric, wherein the spunbonded nonwoven fabric layer forming an outer layer may be configured to be one or more layers, and the internal meltblown nonwoven layer may also be configured to be one or more layers, so the number of layers is not limited. Such a multilayer spunbond nonwoven fabric of the present invention may be referred to as "SMS-based nonwoven fabric."

Meanwhile, the meltblown nonwoven fabric of the present invention may be used as a sound absorbing material, and may preferably be used as an automotive sound absorbing material.

In addition, the multilayer spunbond nonwoven fabric of the present invention may be used as a sound absorbing material, and may preferably be used as an automotive sound absorbing material.

In the above, the present invention has been described focusing on the embodiments of the present invention, but this is only an example and does not limit the present invention, and those of ordinary skill in the field to which the embodiments of the present invention pertain will understand that various modifications and applications that are not illustrated above are possible without deviating from the essential features of the present invention. For example, each feature specifically shown in the embodiments of the present invention can be modified and implemented. In addition, the differences related to these modifications and applications should be construed as being included in the scope of the present invention as defined in the appended claims.

### Example 1: Manufacture of meltblown nonwoven fabric

(1) PET flakes prepared using isophthalic acid as one of the raw materials were pulverized to manufacture PET flake powder with an average particle size of 4 mm.
(2) The manufactured PET flake powder was put into a crystallizer and heated to a temperature of 140 °C while stirring to crystallize the PET flake powder.
(3) The crystallized PET flake powder was melted by heating to a temperature of 280 °C to manufacture a PET melt including 0.5 mol% isophthalic acid (IPA), and the manufactured PET melt was passed through a screen filter to remove foreign substances, thereby manufacturing a PET melt with an intrinsic viscosity (IV) of 0.50 dl/g.
(4) The PET melt was put into a meltblown spinneret, spun at a spinning temperature of 270 °C and then solidified with high-pressure hot air at 270 °C to manufacture meltblown fibers with an average diameter of 1 µm. The manufactured fibers were laminated to manufacture a meltblown nonwoven fabric, which is a self-bonding nonwoven fabric with a basis weight of 600 gsm.

### Example 2: Manufacture of meltblown nonwoven fabric

A meltblown nonwoven fabric was manufactured in the same manner as in Example 1. However, unlike Example 1, when crystallizing the PET flake powder in step (2), it was heated to a temperature of 90 °C to finally manufacture a meltblown nonwoven fabric.

### Example 3: Manufacture of meltblown nonwoven fabric

A meltblown nonwoven fabric was manufactured in the same manner as in Example 1. However, unlike Example 1, when crystallizing the PET flake powder in step (2), it was heated to a temperature of 190 °C to finally manufacture a meltblown nonwoven fabric.

### Example 4: Manufacture of meltblown nonwoven fabric

A meltblown nonwoven fabric was manufactured in the same manner as in Example 1. However, unlike Example 1, when manufacturing the meltblown fibers in step (4), meltblown fibers with an average diameter of 0.2 µm were manufactured to finally manufacture a meltblown nonwoven fabric.

### Example 5: Manufacture of meltblown nonwoven fabric

A meltblown nonwoven fabric was manufactured in the same manner as in Example 1. However, unlike Example 1, when manufacturing the meltblown fibers in step (4), meltblown fibers with an average diameter of 10 µm were manufactured to finally manufacture a meltblown nonwoven fabric.

### Example 6: Manufacture of meltblown nonwoven fabric

(1) PET flakes prepared using isophthalic acid as one of the raw materials were pulverized to manufacture PET flake powder with an average particle size of 4 mm.
(2) The manufactured PET flake powder was put into a crystallizer and heated to a temperature of 140 °C while stirring to crystallize the PET flake powder.
(3) The crystallized PET flake powder was melted by heating to a temperature of 280 °C to manufacture a PET melt including 2.5 mol% isophthalic acid (IPA), and the manufactured PET melt was passed through a screen filter to remove foreign substances, thereby manufacturing a PET melt with an intrinsic viscosity (IV) of 0.50 dl/g.
(4) The PET melt was put into a meltblown spinneret, spun at a spinning temperature of 270 °C and then solidified with high-pressure hot air at 270 °C to manufacture meltblown fibers with an average diameter of 10 µm. The manufactured fibers were laminated to manufacture a meltblown nonwoven fabric, which is a self-bonding nonwoven fabric with a basis weight of 800 gsm.

### Example 7: Manufacture of meltblown nonwoven fabric

A meltblown nonwoven fabric was manufactured in the same manner as in Example 6. However, unlike Example 6, when crystallizing the PET flake powder in step (2), it was heated to a temperature of 90 °C to finally manufacture a meltblown nonwoven fabric.

### Example 8: Manufacture of meltblown nonwoven fabric

A meltblown nonwoven fabric was manufactured in the same manner as in Example 6. However, unlike Example 6, when crystallizing the PET flake powder in step (2), it was heated to a temperature of 190 °C to finally manufacture a meltblown nonwoven fabric.

### Example 9: Manufacture of meltblown nonwoven fabric

A meltblown nonwoven fabric was manufactured in the same manner as in Example 6. However, unlike Example 6, when manufacturing the meltblown fibers in step (4), meltblown fibers with an average diameter of 1 µm were manufactured to finally manufacture a meltblown nonwoven fabric.

### Example 10: Manufacture of meltblown nonwoven fabric

A meltblown nonwoven fabric was manufactured in the same manner as in Example 6. However, unlike Example 6, when manufacturing the meltblown fibers in step (4), meltblown fibers with an average diameter of 25 µm were manufactured to finally manufacture a meltblown nonwoven fabric.

### Experimental Example 1: Measurement of physical properties of meltblown nonwoven fabric

For each of the meltblown nonwoven fabrics manufactured in Examples 1 to 10, the experiments described below were performed, and the measured results are shown in Tables 1 and 2 below.

### (1) Rigidity

An analytical method according to KS M 6518 specifications was performed to measure the rigidity of the meltblown nonwoven fabrics manufactured in Examples 1 to 10.

### (2) Sound absorption

Using ALPHA CABIN equipment according to ISO 354 (Acoustics - Measurement of sound absorption in a reverberation room), the sound absorption coefficients at 1000 Hz, 2000 Hz, 3150 Hz, and 5000 Hz of each of the meltblown nonwoven fabrics manufactured in Examples 1 and 2 were measured (However, the sound absorption test was conducted with frameless flat specimens of 840 mm x 840 mm, the measurement was performed with five or more specimens and the arithmetic average values were indicated.).

### (3) Compressive modulus

Each of the meltblown nonwoven fabrics manufactured in Examples 1 to 10 was cut into pieces of 100 mm x 100 mm to prepare specimens, which were placed between steel plates of 100 x 100 x 0.8 mm, and a weight of 500 g was placed at the center of the upper steel plate. In this state, the specimens were left under the conditions described below, and after the conditions were adjusted by removing the weight (condition adjustment conditions: after leaving at 23 ± 2 °C and 50 ± 5% RH for 1 hour), the compressive modulus was measured (In the thickness measurement method, a specimen of 100 mm x 100 mm was placed on a specimen support, a 150 g compression plate having a size of 100 mm x 100 mm was placed on top of the specimen to compress, and after 10 seconds, the thickness was measured by applying a pressure equal to or less than 0.1 kPa with a 1 cm² disk-shaped compressor. In addition, the thickness measurement point was the center point of each side of the compression plate, and the arithmetic mean value obtained at the four points was taken as the thickness. Equipment that complies with ISO 5084 was used as a measuring instrument.).

### <Conditions>

① Heat resistance: 120 ± 2 °C x 1 hour → Thickness measured after leaving for 1 hour at 23 ± 2 °C and 50 ± 5% RH.
② Humidity resistance: 40 ± 2 °C, 95% RH x 22 hours ---> Thickness measured after leaving for 1 hour at 23 ± 2 °C and 50 ± 5% RH.
③ Compressive modulus (%) = H1/H0 x 100 (H0: specimen thickness before compression, H1: specimen thickness after compression)

**[Table 1]**

| Item | | Example 1 | Example 2 | Example 3 | Example 4 | Example 5 |
|---|---|---|---|---|---|---|
| Rigidity (MPa) | | 1.33 | 1.21 | 1.19 | 1.04 | 1.31 |
| Sound absorption coefficient | 1000 Hz | 0.24 | 0.23 | 0.24 | 0.15 | 0.29 |
| | 2000 Hz | 0.59 | 0.58 | 0.59 | 0.42 | 0.62 |
| | 3150 Hz | 0.84 | 0.82 | 0.82 | 0.79 | 0.63 |
| | 5000 Hz | 0.86 | 0.86 | 0.84 | 0.90 | 0.58 |
| Compressive modulus (%) | | 32.25 | 32.21 | 31.19 | 31.95 | 32.05 |

**[Table 2]**

| Item | | Example 6 | Example 7 | Example 8 | Example 9 | Example 10 |
|---|---|---|---|---|---|---|
| Rigidity (MPa) | | 1.45 | 1.30 | 1.27 | 1.38 | 1.44 |
| Sound absorption coefficient | 1000 Hz | 0.21 | 0.19 | 0.20 | 0.24 | 0.22 |
| | 2000 Hz | 0.55 | 0.53 | 0.54 | 0.58 | 0.50 |
| | 3150 Hz | 0.85 | 0.84 | 0.83 | 0.89 | 0.57 |
| | 5000 Hz | 0.85 | 0.84 | 0.85 | 0.91 | 0.56 |
| Compressive modulus (%) | | 36.02 | 35.67 | 35.72 | 34.98 | 35.11 |

As can be seen in Table 1, compared to the meltblown nonwoven fabric manufactured in Example 1, the meltblown nonwoven fabric manufactured in Example 2 had lower rigidity.

In addition, as can be seen in Table 1, compared to the meltblown nonwoven fabric manufactured in Example 1, the meltblown nonwoven fabric manufactured in Example 3 had lower rigidity.

In addition, as can be seen in Table 1, compared to the meltblown nonwoven fabric manufactured in Example 1, the meltblown nonwoven fabric manufactured in Example 4 had lower rigidity and a lower low-frequency sound absorption coefficient.

In addition, as can be seen in Table 1, compared to the meltblown nonwoven fabric manufactured in Example 1, the meltblown nonwoven fabric manufactured in Example 5 had a lower high-frequency sound absorption coefficient.

As can be seen in Table 2, compared to the meltblown nonwoven fabric manufactured in Example 6, the meltblown nonwoven fabric manufactured in Example 7 had lower rigidity.

In addition, as can be seen in Table 2, compared to the meltblown nonwoven fabric manufactured in Example 6, the meltblown nonwoven fabric manufactured in Example 8 had lower rigidity.

In addition, as can be seen in Table 2, compared to the meltblown nonwoven fabric manufactured in Example 6, the meltblown nonwoven fabric manufactured in Example 9 had lower rigidity.

In addition, as can be seen in Table 2, compared to the meltblown nonwoven fabric manufactured in Example 6, the meltblown nonwoven fabric manufactured in Example 10 had a lower high-frequency sound absorption coefficient.

Although one embodiment of the present invention has been described above, the spirit of the present invention is not limited to the embodiment presented in the present specification, and those skilled in the art who understand the spirit of the present invention can easily suggest other embodiments by adding, changing, and deleting, etc. components within the scope of the same spirit, but these will also be considered as falling in the scope of the spirit of the present invention.

### [Industrial Applicability]

The present invention relates to a meltblown nonwoven fabric, a multi-layered spunbond nonwoven fabric including the same, and a manufacturing method thereof. The present invention relates to a meltblown nonwoven fabric which is a material, which is eco-friendly due to being manufactured using recycled polyester flakes and is used as a sound absorbing material for automobiles for having excellent rigidity and sound absorption and an excellent compressive modulus, and is applicable to automotive interior materials such as automobile wheel guards and trunk trims that require rigidity, sound absorption, and a good compressive modulus; a multi-layered spunbond nonwoven fabric including the same; and a manufacturing method thereof.

## Claims

1. A method of manufacturing a meltblown nonwoven fabric, comprising:
a first step of manufacturing polyester flake powder by pulverizing polyester flakes;
a second step of crystallizing the polyester flake powder by heating;
a third step of manufacturing a melt by melting the crystallized polyester flake powder; and
a fourth step of manufacturing a meltblown nonwoven fabric by manufacturing meltblown fibers by spinning the melt and laminating the manufactured fibers,
wherein the melt includes 0.3 to 3.0 mol% of isophthalic acid (IPA).

2. The method according to claim 1, wherein the polyester flakes include one or more selected from polyethylene terephthalate (PET) flakes, polytetramethylene terephthalate (PTT) flakes, polybutylene terephthalate (PBT) flakes, and polypropylene (PP) flakes.

3. The method according to claim 1, wherein the flake powder manufactured in the first step has an average particle size of 1 to 10 mm.

4. The method according to claim 1, wherein the heating in the second step is performed at a temperature of 100 to 180 °C.

5. The method according to claim 1, wherein the melt manufactured in the third step has an intrinsic viscosity (IV) of 0.40 to 0.60 dl/g.

6. The method according to claim 1, wherein the meltblown fibers manufactured in the fourth step have an average diameter of 0.5 to 20 µm.

7. The method according to claim 1, wherein the meltblown nonwoven fabric manufactured in the fourth step has a basis weight of 100 to 900 gsm.

8. A meltblown nonwoven fabric comprising 0.3 to 3.0 mol% of isophthalic acid (IPA) and having a basis weight of 100 to 900 gsm.

9. The meltblown nonwoven fabric according to claim 8, wherein the meltblown nonwoven fabric is manufactured by spinning a polyester flake melt.

10. The meltblown nonwoven fabric according to claim 8, wherein the meltblown nonwoven fabric is composed of meltblown fibers with an average diameter of 0.5 to 20 µm.

11. The meltblown nonwoven fabric according to claim 8, wherein the meltblown nonwoven fabric has a rigidity of 1.3 to 1.5 MPa when measured according to KS M 6518 specifications.

12. A multilayer spunbond nonwoven fabric comprising a spunbond nonwoven fabric as an outermost layer and one or more meltblown nonwoven fabric layers as an inner layer,
wherein the meltblown nonwoven fabric layer includes the meltblown nonwoven fabric of claim 8.

13. The multilayer spunbond nonwoven fabric according to claim 12, wherein the multilayer spunbond nonwoven fabric is used as an automotive sound absorbing material.
